# EUROPEAN PATENT APPLICATION

(11) **EP 2 305 168 A1**
(43) Date of publication of application: **06.04.2011**
(21) Application number: 09012375.3
(22) Date of filing: 30.09.2009
(51) Int. Cl.: A61C 17/22, A46B 5/02

(54) **Toothbrush**

(71) Applicant: Braun GmbH, 61476 Kronberg/Taunus (DE)
(72) Inventor: Vu, Phong Duy, 65824 Schwalbach (DE); Stegmann, Wolfgang, 60389 Frankfurt/Main (DE); Jungnickel, Uwe, 61462 Königstein (DE)

(57) **Abstract**

A toothbrush is proposed that comprises a brush section (10) and a handle section (100) that longitudinally extends between a first end distal to the brush section (10) and a second end proximal to the brush section (10). The handle section (100) has at least three longitudinally extending edges (101, 102, 103) on the outer surface of the handle section (100) defining three longitudinally extending surfaces areas (110, 111, 112) that each span between two neighboring edges (101, 102; 102, 103; 103, 101), wherein the at least three edges (101, 102, 103) each twist in the longitudinal direction by an angle of about 90 degrees. The resulting handle section was found to provide optimal ergonomic holding properties and additional advantageous properties such as stable lying in a horizontal position on a bathroom shelf.

## Description

### FIELD OF THE INVENTION

The present invention is concerned with a toothbrush having a brush section and a handle section. The invention is in particular concerned with a handle section that has ergonomic handling features.

### BACKGROUND OF THE INVENTION

International patent application WO 2004/060110 A1 describes an electric toothbrush that distinguishes from previous toothbrushes in that a pair of batteries is provided in a 45 degrees offset configuration. It is described that this 45 degrees offset configuration of the pair of batteries produces a natural shape to a handle that is advantageous for a user to hold. This offset positioning of the pair of batteries allows for a more user-friendly handle design.

### SUMMARY OF THE INVENTION

It is thus a desire to provide a toothbrush that can be held in an ergonomic manner and that is improved over the known toothbrushes or at least provides an alternative to the known toothbrushes.

Such a toothbrush is provided in accordance with claim 1. Further embodiments of a toothbrush as proposed are defined by the dependent claims.

A toothbrush as proposed has a brush section (which can be realized as a replaceable brush section) and a handle section. The handle section extends in a longitudinal direction between a first end that is distal to the brush section and a second end that is proximal the brush section. At least three edges are present on the outer surface of the handle section. In an embodiment, four edges are present on the outer surface of the handle section. The edges extend longitudinally, but not necessarily from the first end to the second end, but the edges could smooth out, e.g. towards the second end. The edges define surface areas, which surface areas each span between a pair of neighboring edges. The edges twist in the longitudinal direction by an angle lying in the range of about 80 degrees to 100 degrees, in particular by an angle of about 90 degrees. In the embodiment with four edges (which in turn define four surface areas spanning between each pair of neighboring edges), the rotation of the toothbrush by about 90 degrees (in order to brush the various tooth surfaces of the human denture) is effectively supported by the such given outer form of the handle section.

If the handle section has four edges that twist by about 90 degrees, the edges might be arranged at a 90 degrees distance in a plane perpendicular to the longitudinal extension axis of the toothbrush. The four edges define four surface areas on the outer surface of the handle section. Four surface areas support to hold the toothbrush such that bristles extending from a brush head provided at the brush section either extend upwards, downwards or to one of the sides with respect to the user. Specifically if the edges are arranged at a 90 degrees distance the user can just turn the toothbrush from a given position to the next position by a 90 degrees rotation. If the outer surface is symmetric with respect to these 90 degree turns, the holding feel is identical for the four holding positions.

In contrast to what is described by WO 2004/060110 A1, it was surprisingly found that a twist of the handle section by about 90 degrees instead of 45 degrees provides for optimal ergonomic holding comfort and supports the user in the precise orientation of the toothbrush.

In an embodiment of the proposed toothbrush, the handle section is longitudinally divided into a first handle section part and a second handle section part adjoining the first handle section part, where the first handle section part lies proximal to the brush section. The edges twist essentially only in the second handle section part. Thus, a first handle section part is provided that has a certain structure of the outer surface but gives the user a clear feeling about the orientation of the toothbrush as the surface areas spanning between the edges in the first handle section part do not twist. In an embodiment, a switch button for switching on or off the toothbrush (in a case in which the toothbrush is realized as an electrical toothbrush) is arranged on one of the surface areas of the first handle section part. In another embodiment, one of the surface areas in the first handle section parts is provided in alignment with the brushing orientation of a brush head provided at the brush section, i.e. the centre surface normal vectors of the brush head and of the surface area being in alignment lie in a single plane.

In a further embodiment, the surface areas spanning between the edges are convex in the planes perpendicular to the longitudinal extension axis of the toothbrush. In a refinement of this embodiment, the convexity may vary as a function at least a parameter that is one of the longitudinal position and/or the radial distance of the surface to the longitudinal extension direction. This allows for providing an optimization of the outer surface of the handle section for ergonomic holding.

In yet another embodiment, the handle section has a waist section, which waist section is in particular arranged at a longitudinal position that would coincide with the position of the thenar and hypothenar of the holding hand of a user. In particular, the waist section is provided at a longitudinal distance of about 8 cm - 12 cm from the second end of the handle section or from a thumb resting position.

In an even further embodiment, one of the surface areas spanning between the edges is realized by an attachable part. This allows providing a different material or a differently colored material for one of the surfaces, which material may enhance the holding properties or may improve the identification of the brushing direction by the user. Instead of an attachable part, one of the surface areas may be provided by an (additional) injection molding process by which the surface area is provided.

In an embodiment, the handle section has a longitudinal length of about 13 cm to 20 cm, in particular of about 14 cm to 16 cm.

In another embodiment, the angular position of the edges varies as a function of the longitudinal position in a non-constant manner. In particular, the angular position of the edges changes faster towards the first end of the handle section.

### BRIEF DESCRIPTION OF THE DRAWINGS

The present invention will be further elucidated by a detailed description of an exemplary embodiment and by reference to figures. In the figures
- Fig. 1: shows a perspective onto an electric toothbrush as proposed;
- Fig. 2: shows a side view onto the toothbrush as shown in Fig. 1;
- Fig. 3: shows a frontal view onto the toothbrush as shown in Fig. 1;
- Fig. 4A: shows a cross sectional cut through the toothbrush as previously shown taken along plane A-A as indicated in Fig. 3;
- Fig. 4B: shows a cross sectional cut through the toothbrush as previously shown taken along plane B-B as indicated in Fig. 3;
- Fig. 4C: shows a cross sectional cut through the toothbrush as previously shown taken along plane C-C as indicated in Fig. 3;
- Fig. 4D: shows a cross sectional cut through the toothbrush as previously shown taken along plane D-D as indicated in Fig. 3;
- Fig. 5A: shows a schematic depiction of a toothbrush as proposed when being held by a left-handed user in a holding position in which the toothbrush is switched on or off; and
- Fig. 5B: shows a schematic depiction of a toothbrush as proposed when being held by a right-handed user in a tight holding position adopted during brushing operation.

### DETAILED DESCRIPTION OF THE INVENTION

Generally it is to be stated that even though the following description of an exemplary embodiment of a toothbrush as proposed refers to a powered toothbrush, the proposed toothbrush and its respective features are independent from the toothbrush being a powered toothbrush or a manual toothbrush. Hence, it should be understood that the term "toothbrush" as used herein in general encompasses both powered toothbrushes and manual toothbrushes.

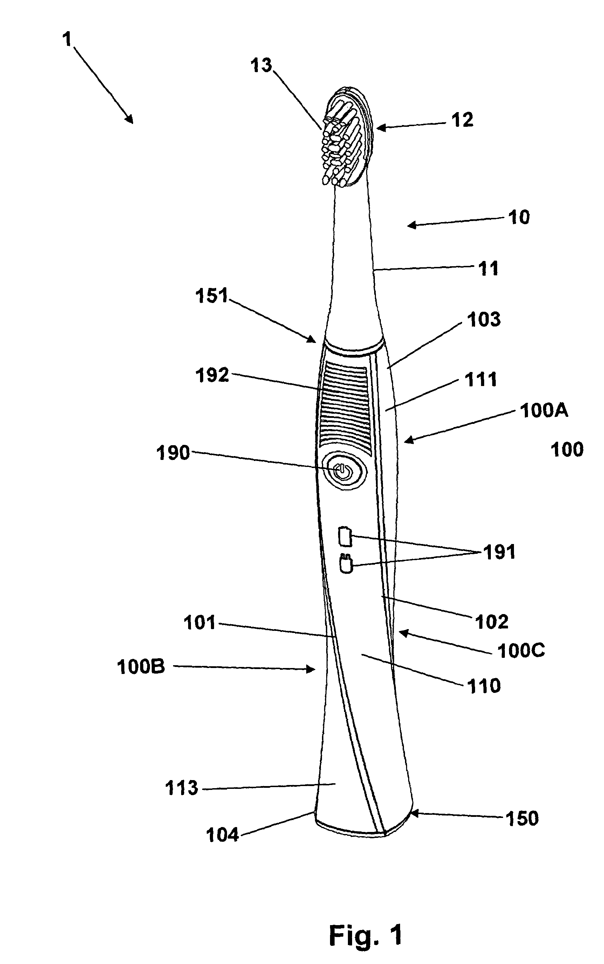

Fig. 1 is a perspective view onto an exemplary toothbrush 1 as proposed realized as a powered toothbrush. The toothbrush 1 comprises a brush section 10 and a handle section 100. The brush section 10 comprises a neck section 11 and a brush head 12 at which a bristle field 13 is arranged. The bristle field 13 comprises a plurality of bristle tufts that extend from a bristle carrier into a brushing direction. The handle section 100 extends from a first end 150 distal to the brush section 10 to a second end 151 proximal the brush section 10.

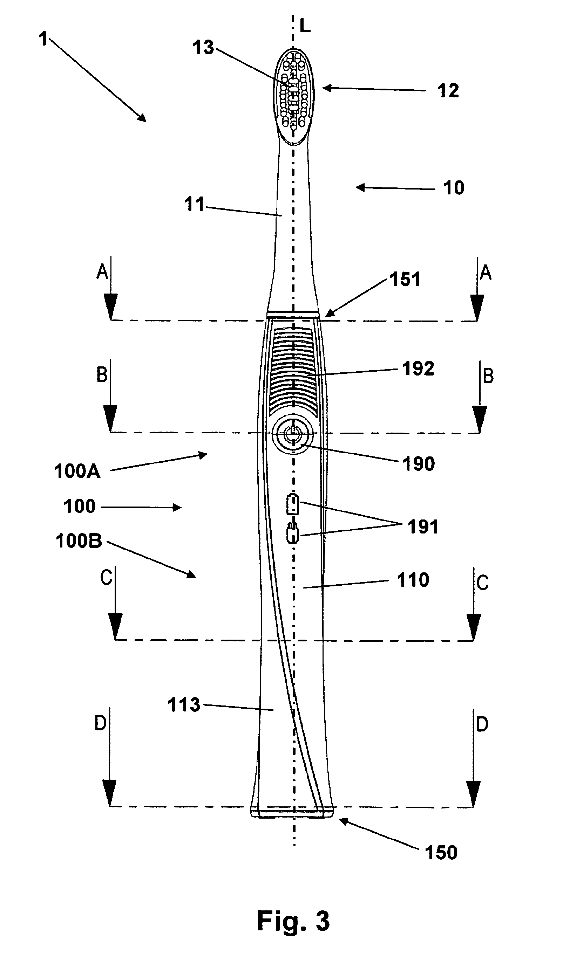

As can be seen in Figs. 1 - 3, the handle section 100 has an outer surface that is insofar irregular as the outer surface has four edges 101, 102, 103, and 104 that extend generally in the longitudinal extension direction of the handle section 100. The four edges 101, 102, 103, and 104 can be realized as rounded edges for ease of manufacture. The four edges 101, 102, 103, and 104 do not cross each other and are here arranged with a constant circumferential distance, i.e. the edges 101, 102, 103, and 104 are arranged such that the first edge 101 has an angular distance in circumferential direction of 90 degrees to the second edge 102, the second edge 102 has an angular distance in circumferential direction to the third edge 103 of 90 degrees, the third edge 103 has an angular distance in circumferential direction to the fourth edge 104 of 90 degrees, and the fourth edge 104 has an angular distance in circumferential direction to the first edge 101 of 90 degrees. The four edges 101, 102, 103, and 104 define four surface areas 110, 111, 112, and 113 that each extend between two neighboring edges, i.e. the first surface area 110 spans between the first edge 101 and the second edge 102, the second surface 111 spans between the second edge 102 and the third edge, the third surface area 112 spans between the third edge 103 and the fourth edge 104, and the fourth surface area 113 spans between the fourth edge and the first edge 101. In the shown embodiment, the four surface areas 110, 111, 112, and 113 are slightly convex in a plane perpendicular to the longitudinal extension axis L (see Fig. 3). The convexity may change as a function of the longitudinal position. In another embodiment, the surface areas 110, 111, 112, and 113 may be slightly concave in at least a certain longitudinal range of the handle section 100. A handle section 100 having thus four surface areas 110, 111, 112, and 113 that are arranged at a homogeneous 90 degrees distance is optimized for holding the toothbrush 1 in four rotation positions that differ by 90 degrees and thus is optimized for brushing the teeth surfaces in the four quadrants of the human denture. It is specific to the shown toothbrush 1 that the four edges 101, 102, 103, and 104 twist (here: anti-clockwise, when seen from the brush section 10 downwards onto the handle section 100) around the longitudinal extension direction of the handle section 100 by 90 degrees. In the shown embodiment, the 90 degrees angular distance in circumferential direction is preserved in longitudinal direction. Nevertheless, it is also contemplated to change the angular distance between the four edges 101, 102, 103, and 104 as a function of the longitudinal position in order to, e.g., optimize the ergonomic holding properties of the handle section 100. In general, the twist of the edges could lie in a range of about 80 degrees to about 100 degrees, in particular between about 85 degrees and about 95 degrees. As the handle section 100 of the shown exemplary toothbrush 1 is to be held in four different orientations, a constant angular distance of 90 degrees between each pair of neighboring edges may be considered as optimal. In another embodiment, the four angular distance values between neighboring edges could be 80 degrees, 100 degrees, 80 degrees, and 100 degrees. Even though the edges 101, 102, 103, 104 extend in the shown embodiment from the first end 150 to the second end 151 of the handle section 100, it is to be understood that the edges could only be present on a certain longitudinal section of the handle section, which longitudinal section in general should cover at least about 80 percent of the length of the handle section 100. E.g. the four edges 101, 102, 103, and 104 could gradually taper off towards the second end 151 of the handle section such that the cross section perpendicular to the longitudinal extension axis would gradually change from a four-cornered cross section to an e.g. circular, oval or ellipsoidal cross section.

The toothbrush 1 as shown also comprises a switch 190 for switching on and off a movement of the brush section 113 (a drive mechanism and a power supply are arranged in the handle section 100 as is known in the art). Further, the handle section 100 may comprise illuminated icons 191 as is schematically shown. The icons may be used to show a certain function that is currently performed during operation of the toothbrush 1 to the user or an icon 191 may be used to indicate a charge status of a rechargeable battery used as power supply for the drive system. In the shown embodiment, the switch 190 is arranged on a surface area 110 that is in alignment with the brush head orientation. The handle section 100 may also comprise a ribbed area 192 that can be arranged longitudinally above the switch 190 to provide a resting place for the thumb of the hand of a user while holding the toothbrush 1 during brushing operation.

As can be seen in Fig. 1, the four edges 101, 102, 103, and 104 that here longitudinally extend from the first end 150 of the handle section 100 that is distal to the brush section 10 to the second end 151 of the handle section 100 that is abutting the brush section 10 do essentially not twist in a first handle section part 100A proximal the brush section 10 but twist in a second handle section part 100B. The switch 190 is arranged on the first handle section part 100A, while the illuminated icons 191 are arranged in the upper part of the second handle section part 100B that abuts the first handle section part 100A. Thus, all the electronic parts that relate to the switch 190 and the icons 191 can be arranged on an untwisted single circuit board, which circuit board is arranged in a hollow inner cavity of the handle section 100 that also accommodates the drive system and the power source.

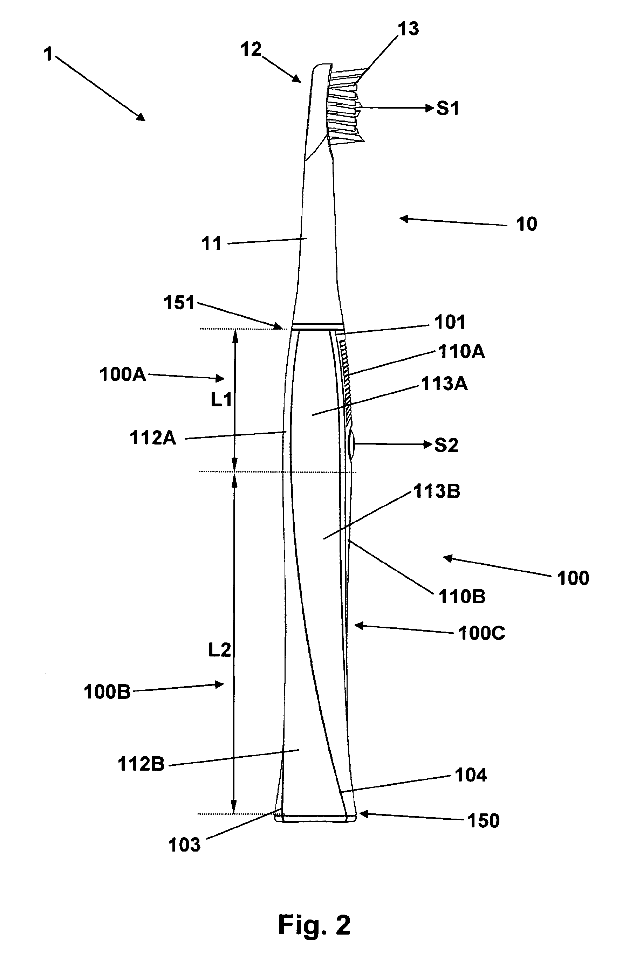

Fig. 2 is a side view onto the exemplary toothbrush 1 as shown in Fig. 1. It is indicated that the first handle section part 100A where the edges do essentially not twist longitudinally extends over a first length L1 while the second handle section part 100B along which the edges twist by 90 degrees longitudinally extends over a second length L2. In the shown embodiment, the first length L1 is about half as long as the second length L2. In a specific embodiment, the handle section 100 has a longitudinal length of about 15 cm, while the first handle section part 100A has a length of about 3 cm - 5 cm and the second handle section part 100B consequently has a length of about 12 cm - 10 cm. It is also indicated that the brushing orientation of the brush head 12 that may be defined by a centre normal S1 is in alignment with the orientation of the switch arranged on the surface area 110A, which surface area 110A has a centre normal S2 that essentially coincides with the centre normal S1 of the brush head 12. Thus, positioning the thumb on the surface part 110A gives the user a clear feeling about the orientation of the brush head 12.

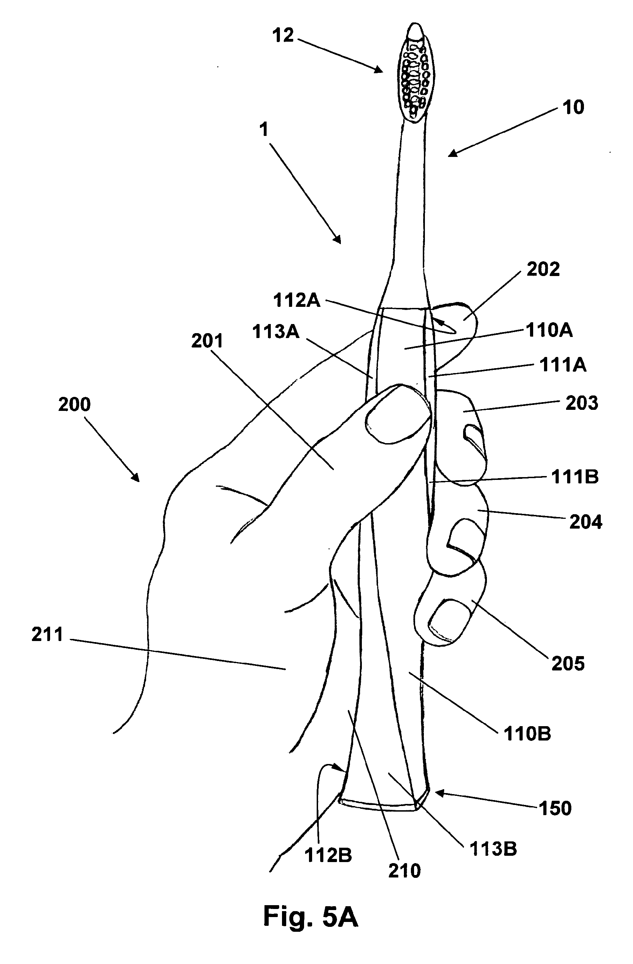

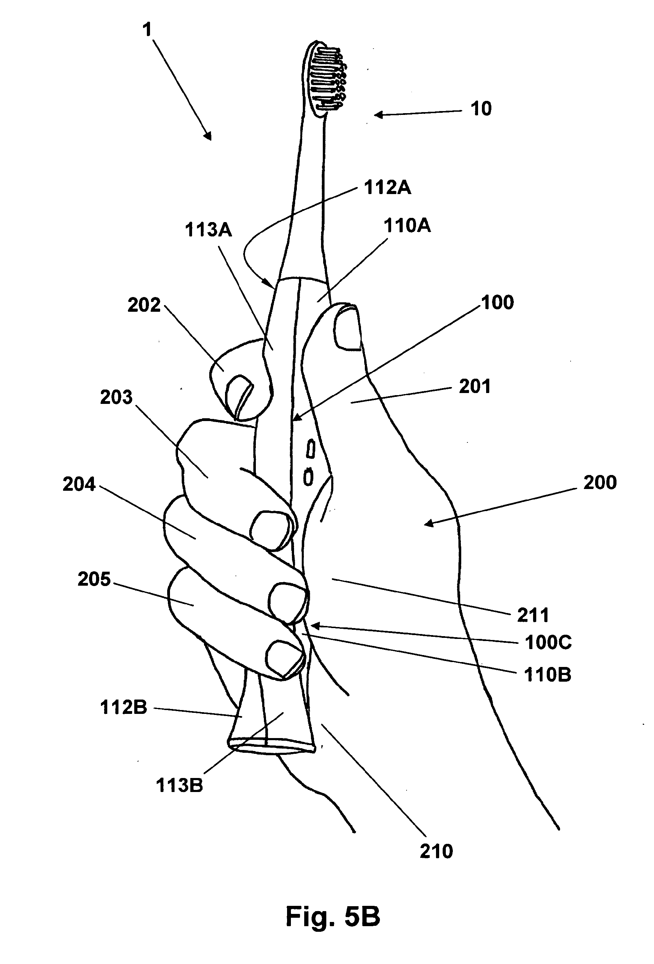

In can also be seen in Figs. 1 - 3 that the handle section 100 has a waist section 100C that has a lower diameter (e.g. measured between two opposing edges) than the parts of the handle section 100 above and below the waist section 100C (where "above" and "below" is to be understood with respect to the longitudinal extension axis L). The waist section 100C supports the ergonomic holding properties of the handle section 100. In particular, as will be explained in more detail with reference to Figs. 5A and 5B, the waist section 100C effectively suppresses that the handle section 100 - even if wet and slippery during operation due to a mixture of water, toothpaste and saliva covering the outer surface - slips through the holding hand of the user, as the waist section 100C provides almost a form-fitting counterpart to the hypothenar and thenar of the hand of the user. In an embodiment, where the length of the handle section 100 is about 15 cm, the centre of the waist section 100C may be arranged at a distance of about 4 cm - 6 cm measured from the first end 150 of the handle section 100 that is distal to the brush section 10 to the centre of the waist section 100C.

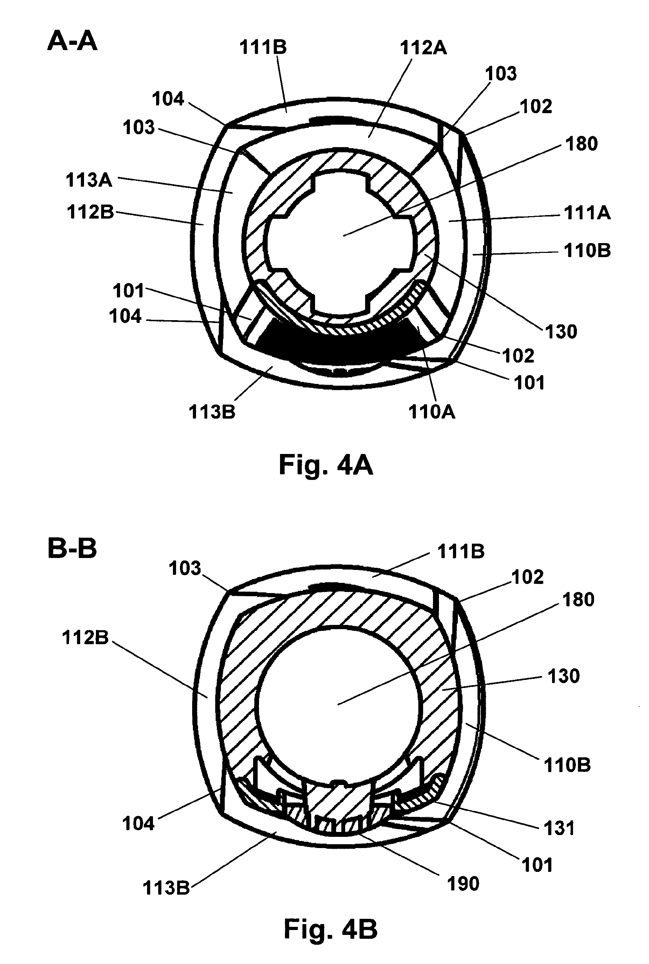

Fig. 3 is a frontal view onto the toothbrush 1 as shown in Fig. 1 and Fig. 2. The longitudinal extension axis L is indicated. Further, four cutting planes A-A, B-B, C-C, and D-D that are perpendicular to the longitudinal extension axis L are indicated. Respective cross sectional cuts along the indicated planes perpendicular to the longitudinal extension axis L are shown in Figures 4A - 4D and will be described in the following. The Figures 4A - 4D do not show the inner features of the toothbrush, i.e. the cross sectional cuts do not shown the drive shaft, drive system, circuit boards, power supply, gear section etc. for sake of simplicity and visibility of the features of the handle section.

Fig. 4A shows a cross sectional cut through the toothbrush 1 shown in Fig. 3 taken along the plane A-A which is perpendicular to the longitudinal extension axis L of the toothbrush 1. The plane A-A cuts through the second end of the handle section that abuts the brush section. The viewing direction is from the brush section downwards to the first end of the toothbrush that is distal to the brush section. In this top-down view it can be seen that the angular positions of the four edges 101, 102, 103, and 104 is essentially constant in the first handle section part 100A (see Fig. 2) until at least the widest section that coincides with the centre of the switch 190 shown in Fig. 3 (a cut through this widest section of the first handle section part is shown in Fig. 4B). Insofar the outer surface of the second handle section part 100B (see Fig. 2) is visible in Fig. 4A, it can be seen that the angular positions of the edges 101, 102, 103, and 104 twist in anti-clockwise direction. In total, the angular positions of all four edges 101, 102, 103, and 104 twist by 90 degrees from the second end of the handle section to the first end of the handle section. The housing 130 has a certain thickness and an inner cavity 180. The handle section may be made from a plastic material such as ASA (acrylonitrile styrene acrylate), ASB (acrylonitrile butadiene styrene) or PP (polypropylene) that has some medium thickness at the level of plane A-A. It can also be seen that in the shown embodiment that the housing 130 comprises an attachable part 131 that forms the surface area 110 that spans between the first and second edges 101 and 102. Via this attachable part 131, the surface area 110 spanning between the first edge 101 and the second edge 102 can be made from a different material (e.g. having enhanced grip properties) or from a differently colored material for easier identification of the front side of the toothbrush.

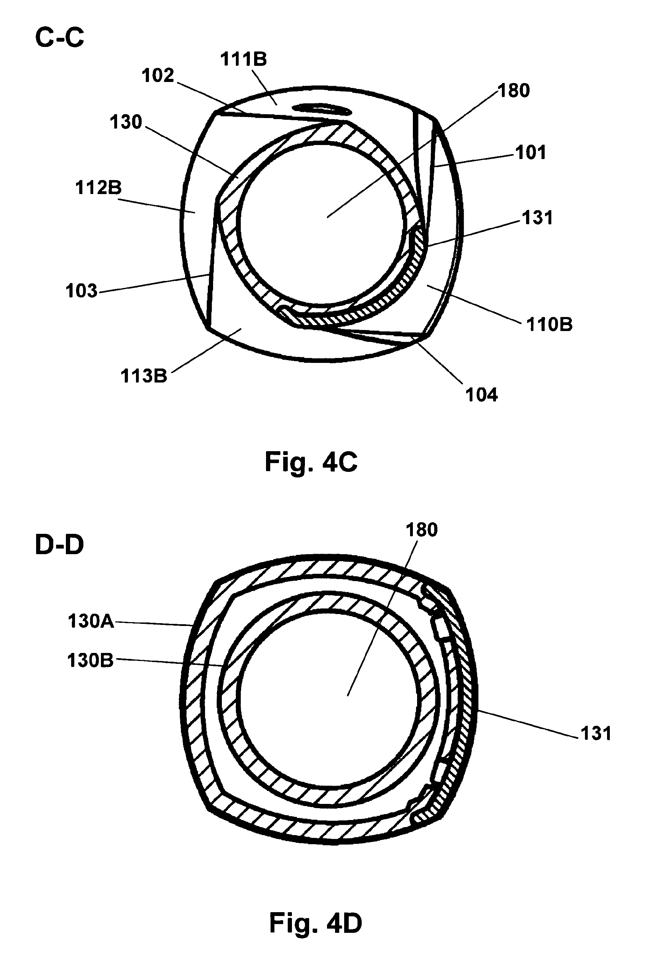

Fig. 4B shows a cross sectional cut through the toothbrush shown in Fig. 3 taken along the plane B-B which is perpendicular to the longitudinal extension axis L of the toothbrush. The plane B-B cuts through the centre of the switch 190 shown in Fig. 3. The viewing direction is from the brush section downwards to the first end of the toothbrush that is distal to the brush section. It can be seen that the thickness of the housing 130 of the handle section is larger than in plane A-A. In case the housing is manufactured by a plastic injection molding process, the essentially cylindrical inner cavity 180 of the housing is defined by a core provided in the injection mold. In such a manufacturing process, the thickness variations of the housing 130 and thus the difference between the widest housing diameter (here: provided at plane B-B) and the smallest housing diameter (here: provided in the centre of the waist section 100C shown in Fig. 3 with cross sectional cut shown in Fig. 4C) is defined by the parameters of the plastic injection molding process. In another embodiment, widened sections of the handle section could be achieved by attachable parts.

Fig. 4C shows a cross sectional cut through the toothbrush 1 shown in Fig. 3 taken along the plane C-C which is perpendicular to the longitudinal extension axis L of the toothbrush. The plane C-C cuts through the centre of the waist section 100C shown in Fig. 3. The viewing direction is from the brush section downwards to the first end of the toothbrush that is distal to the brush section. It can be seen that the housing 130 has a low thickness, while the inner cylindrical cavity 180 formed in the housing has essentially the same diameter as in plane B-B (a small difference may occur due to a slight conical shape of the core, which conical shape is provided for easy removal of the core from the housing at the end of the injection molding process). The four edges 101, 102, 103, and 104 twist by about 55 degrees from the plane C-C to the first end of the handle section (plane D-D), which shows that the incremental twist per longitudinal length increases towards the first end of the handle section in order to optimally follow the anatomical contour of the hand of a user.

Fig. 4D shows a cross sectional cut through the toothbrush shown in Fig. 3 taken along the plane D-D which is perpendicular to the longitudinal extension axis L of the toothbrush. The plane D-D cuts through the first end of the handle section. The viewing direction is from the brush section downwards to the first end of the toothbrush that is distal to the brush section. It can be seen that a widened section at the first end of the toothbrush is realized by splitting the housing at a certain level into an outer shell 130A and an inner sleeve 130B; a further core can be provided in the injection mold to achieve this.

Fig. 5A schematically shows a toothbrush 1 as proposed in accordance with the exemplary embodiment as previously discussed when being held by a user's hand 200 (here: a left-handed user) in a first holding position in which the user switches the toothbrush 1 on or off (via a switch that is here covered by the thumb 201 of the user). The thumb 201 rests on the surface area 110A on which the switch is provided. The orientation of the surface area 110A is arranged in alignment with the brushing orientation of the brush head 12. The index finger 202 rests on the surface area 112A that is opposite to the surface area 110A. The hypothenar 210 rests against the surface area 112B that is essentially twisted by 90 degrees in anti-clockwise direction when seen from the brush section 10 downwards. The middle finger 203 partially grips around surface area 112A and surface area 111A, while the ring finger 204 and the little finger 205 press against the twisted surface area 110B in order to fix the toothbrush 1 between these two fingers and the hypothenar 210. As can be seen, the twist of the surface areas 110, 111, 112, and 113 thereby optimally follows the natural positions of the thumb 201, the fingers 202, 203, 204, and 205 and the hypothenar 210. Thus, the toothbrush 1 as proposed provides very ergonomic holding properties. It further provides optimal guidance to the user for rotating the toothbrush 1 by 90 degree steps around the longitudinal extension axis due to the provision of four surface areas 110, 111, 112, 113 that are arranged with a 90 degree angular offset in circumferential direction. Additionally, as can be easily understood, the twist of the edges 101, 102, 103, and 104 (and hence of the surface areas spanning between the edges) by 90 degrees provides optimal lying properties (i.e. in a position when a user puts the toothbrush 1 horizontally on a bathroom shelf) as, e.g., the upper surface area 112A provides a first lying surface and the surface area 111B that is twisted by 90 degree provides a second lying surface so that the toothbrush 1 lies relative stable in the horizontal position. Hence, an additional roll stopper element is gratuitous.

In a somewhat tighter holding position, which is adopted during the brushing operation, in which the thumb is moved upwards (e.g. onto the ribs 192 as shown in Fig. 3), the thenar 211 of the left hand 200 rests against the twisted portion of surface 113B in the waist section 100C of the handle section 100, while the hypothenar 210 presses against the twisted surface area 112B at the first end of the handle section 100. The middle finger 203, the ring finger 204, and the little finger 205 then press against the twisting surface 110A.

Fig. 5B shows by example of an exemplary embodiment of a proposed toothbrush a tight holding position as is being adopted by a right-handed user during the brushing operation. Here, the thumb 201 of the hand 200 of the right-handed user lies against the surface area 110A, the index finger 202 embraces the toothbrush 1 and lies against the surfaces 112A and 113A. The middle finger 203, the ring finger 204 and the little finger 205 follow the twist of the surface113B. The thenar 211 of the right hand follows the twist of the surface area 110B essentially in the waist section 100C of the handle section (which thus provides for an ergonomically optimal indentation of the handle section 100), while the hypothenar 210 presses against the lower part of the twisted surface area 111B. The twist of 90 degrees thus ergonomically follows the curves of thenar 211 and hypothenar 210 of a right-handed user and also provides for the optimal grip position of the thumb and fingers. As the thenar 211 and the hypothenar 210 closely embrace the waist section 100C along the twisting surfaces 110B and 111B, the waist section 100C effectively ensures a tight hold of the toothbrush 1 even if the outer surface of the handle section 100 is covered with a mixture of toothpaste, water, and saliva. Handle sections having a smooth cross section such as a circular cross section and/or that have no waist section tend to move through the holding hand due to the pressure applied on the toothbrush in longitudinal direction during brushing operation.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Toothbrush comprising a brush section (10) and a handle section (100) that longitudinally extends between a first end (150) distal to the brush section (10) and a second end (151) proximal to the brush section (10), which handle section (100) has at least three longitudinally extending edges (101, 102, 103) on the outer surface of the handle section (100) defining three longitudinally extending surfaces areas (110, 111, 112) that each span between two neighboring edges (101, 102; 102, 103; 103, 101), wherein the at least three edges (101, 102, 103) each twist in the longitudinal direction by an angle lying in the range of about 80 degrees to about 100 degrees.

2. Toothbrush according to claim 1, wherein the handle section has at least four longitudinally extending edges (101, 102, 103, 104) on the outer surface of the handle section defining four longitudinally extending surface areas (110, 111, 112, 113) that each span between two neighboring edges (101, 102; 102, 103; 103, 104; 104, 101), wherein the at least four edges (101, 102, 103, 104) each twist in the longitudinal direction by an angle lying in the range of about 80 degrees to about 100 degrees.

3. Toothbrush according to claim 1 or claim 2, wherein the edges (101, 102, 103, 104) twist by an angle of about 90 degrees.

4. Toothbrush according to any one of claims 1 to 3, wherein the handle section (100) is longitudinally divided into a first handle section part (100A) and a second handle section part (100B) that is adjoining the first handle section part (100A) in the longitudinal direction and the edges (101, 102, 103) twist essentially only on the second handle section part (100B).

5. Toothbrush according to any one of claims 1 to 4, wherein a switch button (190) is arranged on one of the surfaces areas (110A).

6. Toothbrush according to any one of claims 1 to 5, wherein a surface area (110A) formed between two neighboring edges (101, 102) an the first handle section part (100A) is arranged in alignment with the brushing orientation (S1) of a brush head (12) of the brush section (10).

7. Toothbrush according to any one of claims 1 to 6, wherein the surface areas (110, 111, 112, 113) spanning between the edges (101, 102, 103, 104) of the handle section (100) are convex in a plane perpendicular to a longitudinal extension direction (L) of the toothbrush (1).

8. Toothbrush according to the previous claim, wherein the convexity of the surface areas (110, 111, 112) varies as a function of a parameter that is at least one of the longitudinal position and the radial distance to the longitudinal extension axis (L) of the toothbrush.

9. Toothbrush according to any one of claims 1 to 8, wherein the handle section (100) has a waist section (100C).

10. Toothbrush according to the previous claim, wherein the waist section (100C) is arranged with a longitudinal distance of about 8 cm - 12 cm from the second end (151) of the handle section (100).

11. Toothbrush according to any one of claims 1 to 10, wherein one of the surface areas (110) is realized by an attachable part (131).

12. Toothbrush according to any one of claims 1 to 11, wherein the handle section (100) has a length lying in the range of about 13 cm to about 20 cm.

13. Toothbrush according to any one of claims 1 to 12, wherein the angular position of the edges (101, 102, 103, 104) varies as a function of the longitudinal position in a non-constant manner.

14. Toothbrush according to the previous claim, wherein the angular position of the edges varies faster towards the first end (150) of the handle section (100).
